(19) Europäisches Patentamt
European Patent Office
Office européen des brevets

(11) **EP 3 330 818 A1**

(12) **EUROPÄISCHE PATENTANMELDUNG**

(43) Veröffentlichungstag:
**06.06.2018 Patentblatt 2018/23**

(51) Int Cl.:
*G05B 23/02* (2006.01)    *G01M 13/04* (2006.01)

(21) Anmeldenummer: **16201469.0**

(22) Anmeldetag: **30.11.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Li, Rui**
 **91054 Erlangen (DE)**
• **Ochsenfeld, Henning**
 **26123 Oldenburg (DE)**
• **Pospisil, Jan**
 **91058 Erlangen (DE)**

(54) **VERFAHREN UND VORRICHTUNG ZUR ZUSTANDSÜBERWACHUNG VON KOMPONENTEN EINER TECHNISCHEN ANLAGE**

(57) Die Erfindung betrifft ein Verfahren und eine entsprechende Vorrichtung zur Zustandsüberwachung von Komponenten einer technischen Anlage. Die Eingangsdaten, welche aus Sensordaten in Verbindung mit einer Maschinenkomponente gewonnen sind, werden erfindungsgemäß einem Merkmalsextraktionsverfahren zugeführt, welches gemäß einem Deep-Learning Verfahren ausgebildet ist, und Merkmale, die Informationen der überwachten Komponenten enthalten, mittels eines vielschichtigen Autoencoders extrahiert. Der Autoencoder berechnet die Eingangsdaten mittels der extrahierten Merkmale neu und vergleicht diese Ausgangsdaten des Autoencoders mit den Eingangsdaten. Durch Veränderung der Merkmale wird der Autoencoder solange trainiert, bis die Ausgangsdaten des Autoencoders nahezu den Eingangsdaten entsprechen. Nach der Trainingsphase werden die Merkmale, die einen Zustand der überwachten Komponenten charakterisieren, ausgegeben. Die Zustandsüberwachung ähnlicher Maschinenkomponenten kann so automatisiert, allein auf der Basis eines datengetriebenen Algorithmus, erfolgen.

FIG 1

**Beschreibung**

Die Erfindung betrifft ein Verfahren und entsprechende Vorrichtung zur Zustandsüberwachung von Komponenten einer technischen Anlage.

Im Bereich der Zustandsüberwachung (engl.:"condition monitoring") von Maschinen, Geräten oder sonstigen Komponenten einer technischen Anlage (auch Assets genannt, vom Englischen "asset" = das Gut, der Vermögenswert) gibt es seit längerem Ansätze auf Basis von mittels Sensoren erfassten Daten die Maschine oder Komponente einer technischen Anlage automatisiert, d.h. von datengetriebenen Algorithmen und ohne Einbringung menschlicher Expertise, zu überwachen. Betreiber können somit entsprechend über abnormale- und Fehlerzustände der überwachten Maschinen oder Anlagenkomponenten rechtzeitig informiert werden und eine vorbeugende Wartung (engl. "predictive maintenance") einleiten, wodurch Instandhaltungs- bzw. Instandsetzungskosten eingespart werden können.

Das Problem bzw. die Vorrausetzung datengetriebener Verfahren ist allerdings immer, dass etwaige Normal- und Fehlerzustände der Maschinen oder Anlagenkomponenten zunächst durch historische Daten (beispielsweise aus einem Archiv) "erlernt" werden müssen, um anschließend robuste und verlässliche Servicequalität zu gewährleisten. D.h. konkret, dass für Endkunden interessante Fehlerzustände ihrer Maschinen oder Anlagenkomponenten in Datensätzen bereits vorhanden sein müssen, um die analytischen Prozesse zu initialisieren und zu befähigen, eben jenen Fehler künftig zu erkennen. Gerade für neu anzuschließende Anlagenkomponenten existieren solche Datensätze von fehlerhaften Zuständen nicht.

Zudem kommt, dass bislang existente Verfahren auf manuell aufwändig designten und zusammengestellten Merkmalen oder Eigenschaften (engl. "hand-crafted features") arbeiten, welche hochgradig abhängig von den Asseteigenschaften, also der Betriebsart, dem Gewicht, der Umgebungseigenschaften und den Materialeigenschaften einer Maschine oder Anlagenkomponente sind. Auch hier ergibt sich das Problem erneut, dass manuell gewählte Merkmale oder Eigenschaften, Attribute, Aspekte (engl. features) bei jeder Anlage anders aussehen können und die Merkmalsrepräsentation der Maschine somit durch eine ausreichend historische Datenbasis zu Beginn erlernt werden muss - einer der bislang limitierenden Faktoren für automatisiertes Condition Monitoring.

Der Erfindung liegt daher die Aufgabe zugrunde, ein verbessertes Verfahren und eine entsprechende Vorrichtung zur Zustandsüberwachung von Komponenten einer technischen Anlage, insbesondere einer Maschine mit rotierenden Maschinenkomponenten, anzugeben.

Die Aufgabe wird erfindungsgemäß durch die Merkmale der Ansprüche 1 und 4 gelöst.

Vorteilhafte Ausgestaltungen der Erfindung sind Gegenstand der Unteransprüche.

Der Grundgedanke der Erfindung besteht darin, einen Algorithmus zum maschinellen Lernen für die Zustandsüberwachung von Komponenten einer technischen Anlage, insbesondere von rotierenden Maschinenkomponenten, zu verwenden. Erfindungsgemäß werden aus einem zuvor erfassten Datenset bestimmte charakteristische Merkmale der überwachten Komponenten eigenständig erkannt und extrahiert.

Die Eingangsdaten, welche aus Sensordaten in Verbindung mit einer Maschinenkomponente gewonnen sind, werden erfindungsgemäß einem Merkmalsextraktionsverfahren zugeführt, welches gemäß einem Deep-Learning Verfahren ausgebildet ist, und Merkmale, die Informationen der überwachten Komponenten enthalten, mittels eines vielschichtigen Autoencoders extrahiert. Der Autoencoder berechnet die Eingangsdaten mittels der extrahierten Merkmale neu und vergleicht diese Ausgangsdaten des Autoencoders mit den Eingangsdaten. Durch Veränderung der Merkmale wird der Autoencoder solange trainiert, bis die Ausgangsdaten des Autoencoders nahezu den Eingangsdaten entsprechen. Nach der Trainingsphase werden die Merkmale, die einen Zustand der überwachten Komponenten einer technischen Anlage charakterisieren, ausgegeben.

Der Vorteil des erfindungsgemäßen Verfahrens besteht insbesondere darin, dass es sich dabei um ein generisches Merkmalsextraktionsverfahren handelt, das rein datenbasiert ist und daher einen wesentlich generischeren Umgang mit individuellen Maschinenkomponenten erlaubt als über den Weg mittels hand-crafted Features. Neue Komponenten einer technischen Anlage, z.B. verwandter Maschinenkomponenten können somit ohne vorheriges händisches Feature-Engineering und ohne üppige Datenbasis angeschlossen und auf bereits erlernte Fehlertypen hin überwacht werden. Weitere Vorteile sind, dass bei einem unüberwachten Merkmalsextraktionsverfahren wie dem Autoencoder kein Labeling der Daten notwendig ist, um repräsentativ optimale Sets von Merkmalen zu erzeugen. Ein weiterer Vorteil besteht darin, dass der Autoencoder auch nichtlineare Signalkomponenten und -eigenschaften extrahieren kann.

In einer weiteren vorteilhaften Ausführungsvariante kann das erfindungsgemäße Verfahren der automatischen Merkmalsextraktion mit weiteren Merkmalen aus Expertenwissen kombiniert werden. Dies stellt eine wertvolle Ergänzung dar, wenn bereits aus jahrelanger Erfahrung zum Beispiel einige Merkmale bereits bekannt sind oder in einem speziellen Fall eingestellt werden sollen.

Das erfindungsmäße Verfahren oder die entsprechende Vorrichtung lässt sich besonders vorteilhaft einsetzen, wenn es sich bei den Eingangsdaten um vibro-akustische Daten handelt. Da Zustandsüberwachung häufig weitestgehend auf visueller Analyse vibroakustischer Daten durch jahrelang erfahrene Experten beruht, wobei zum Beispiel kinematische Tabellen abhängig von der Maschinenkomponente konfiguriert werden müssen und spezifische Alarmschwellen gesetzt werden müssen, kann durch den Einsatz von Deep-Learning Verfahren die Zustandsüberwachung einfacher und mit weniger Aufwand betrieben werden.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:

Fig. 1    eine schematische Darstellung eines Ausführungsbeispiels für ein Überwachungssystems gemäß der Erfindung,

Fig. 2    eine Skizze, in der eine Autoencoder-Struktur mit einer Schicht dargestellt ist,

Fig. 3    ein Flussdiagramm eines Ausführungsbeispiels des Verfahrens zur Überwachung von Komponenten einer technischen Anlage unter Verwendung eines Deep-Learning Algorithmus und

Fig. 4    ein Ausführungsbeispiel des erfindungsgemäßen Verfahrens mit vibro-akustischen Eingangs- und Ausgangsdaten.

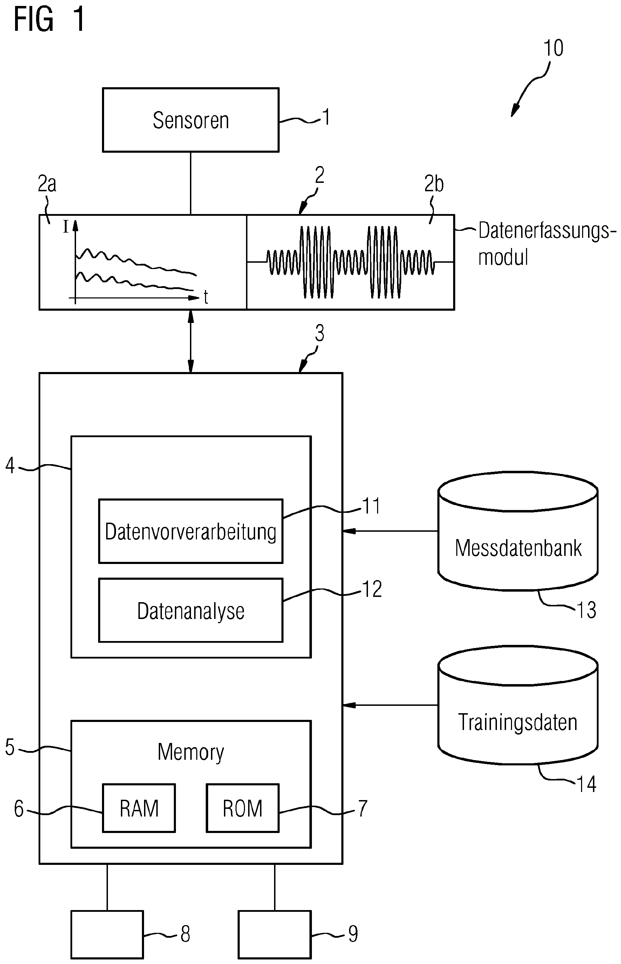

Figur 1 zeigt ein Ausführungsbeispiel eines Zustandsüberwachungssystems 10 für Komponenten einer technischen Anlage. Als Komponenten werden hier insbesondere Maschinen, Motoren, Antriebe oder sonstige Aggregate oder Geräte mit rotierenden Komponenten verstanden. Mittels Sensoren 1, die mechanisch, optisch, akustisch oder in sonstiger Weise mit den Komponenten verbunden oder gekoppelt sind, werden Daten erfasst, welche den Zustand der jeweiligen Komponente charakterisieren. Grundsätzlich können der Zustandsüberwachung unterschiedlichste Sensordaten zugrunde liegen, beispielsweise Daten, welche Vibrationen kennzeichnen, Daten von Sensoren zur Erkennung von Verschleiß, Daten von Temperatursensoren zur Erkennung erhöhter Betriebstemperatur, Sensordaten bezüglich der Erkennung der Qualität eines Schmiermittels etc. Bei Vibrationsdaten kann es sich um sämtliche Signale, welche Schwingungen kennzeichnen, handeln, wozu insbesondere Amplituden und Frequenzen gehören, aber auch Drehgeschwindigkeiten oder -beschleunigungen und Spektren aller Art, auch akustische Spektren. Zur Erfassung von Vibrationsdaten ist in Fig. 1 ein an die Sensoren 1 angeschlossenes Datenerfassungsmodul 2 vorgesehen, welches in der Lage ist, die Daten zeitabhängig aufzunehmen und beispielsweise als Trend 2a oder als Schwingungsspektrum 2b darzustellen. Es kann sich dabei z.B. um ein Oszilloskop handeln. Die derart erfassten Eingangsdaten werden anschließend einem Computer 3 zugeführt, in welchem die Schritte des erfindungsgemäßen Verfahrens ausgeführt werden. Statt eines einzelnen Computers 3, wie in Fig. 1 gezeigt, kann die Berechnung des erfindungsgemäßen Verfahrens auch in einem Computersystem, welches aus mehreren Computern, die über einen Bus verbunden sind, durchgeführt werden. Der Computer 3 oder das Computersystem sind ferner mit einem Eingabemittel 8 wie eine Tatstatur, Maus oder Touchpad und ein Ausgabemittel 9, wie einem Bildschirm jeglicher Ausgestaltung, verbunden.

Der Computer 3 umfasst eine zentrale Verarbeitungseinheit CPU 4 (engl. central processing unit) und ein Speichermodul 5, welches sowohl über einen Random Access Memory-Modul (RAM) 6 als Arbeitsspeicher für Daten, die während der Ausführung eines Softwareprogrammes in der CPU benötigt werden, als auch über ein Read Only Memory-Modul (ROM) 7 verfügt, in welchem Computerprogramme gespeichert werden, welche von der CPU 4 ausgeführt werden. Der Computer 3 kann ferner mit externen Datenspeichern oder Datenarchiven verbunden werden, wie beispielsweise einer Datenbank 13 für historische Messwerte/Daten oder einer Datenbank 14 für sonstige Daten wie Trainingsdaten für ein neuronales Netz.

Die CPU enthält eine oder mehrere Datenverarbeitungs- und Datenanalysemodule 11 und 12, die derart ausgebildet sind, um beliebige Verfahren zum Verarbeiten und Analysieren von Sensordaten durchzuführen.

In diesem Ausführungsbeispiel umfasst das Datenanalysemodul 12 einen Algorithmus zum maschinellen Lernen, welcher hier als automatisiertes Zustandsüberwachungsverfahren verwendet wird. Bei dem hier verwendeten Lernalgorithmus handelt es sich um ein so genanntes Deep-Learning Verfahren, welches zu einer Klasse von Optimierungsverfahren von künstlichen neuronalen Netzen mit zahlreichen Zwischenlagen (engl. hidden layers) zwischen Eingabeschicht und Ausgabeschicht gehört. "Deep Learning" ist unter anderem in dem Artikel von Y. LeCun, Y. Bengio & G. Hinton in Nature, Vol. 521, S. 436 (2015) näher beschrieben. Der Algorithmus erzeugt für eine große Datenmenge ein Modell, das die Eingabedaten beschreibt, und Vorhersagen ermöglicht. Er zielt darauf ab, die beobachteten Daten in eine einfachere Repräsentation zu übersetzen, die sie trotz drastisch reduzierter Information möglichst genau wiedergibt. Wenn sehr viele Eingangsdaten vorhanden sind, ist die Wahrscheinlichkeit, dass auch redundante Informationen bei den Eingangsdaten vorhanden sind, hoch. Mit der Merkmalsextraktion geht demnach stets eine Dimensionsreduzierung einher, also eine reduzierte Auswahl der Merkmale. Zur Merkmalsextraktion wird in diesem Ausführungsbeispiel ein mehrschichtiger Autoencoder verwendet.

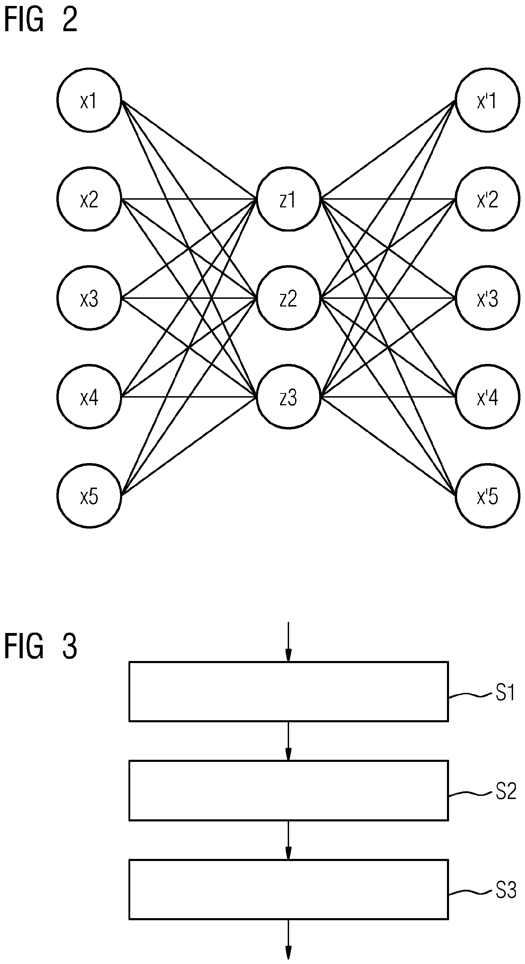

In Fig. 2 ist die einfachste Struktur eines Autoencoders gezeigt. Ein Autoencoder ist ein künstliches neuronales Netz, das derart trainiert wird, dass die Eingangsdaten mit den Ausgangsdaten weitestgehend übereinstimmen. Die in Fig. 2 gezeigten Eingangsdaten x1 bis x5 werden in diesem Beispiel einer einzelnen Schicht aus Neuronen zugeführt, welche hier drei verborgene Variablen z1, z2 und z3 umfasst. Mittels der verborgenen Variablen werden die Ausgangsdaten x'1 bis x'5 rekonstruiert. Werden bei einer solchen Autoencoder-Struktur Neuronen in mehreren hintereinander liegenden Schichten (engl. layers) angeordnet, so spricht man von einem mehrschichtigen Autoencoder. Die hinterste Schicht des Netzes, deren Neuronenausgaben meist als einzige außerhalb des Netzes sichtbar sind, wird Ausgabeschicht (engl. output layer) genannt. Davorliegende Schichten werden entsprechend als verdeckte oder verborgene Schicht (engl. hidden layer) mit den verborgenen Variablen (in dem gezeigten Beispiel nur eine Schicht mit den verborgenen Variablen z1 bis z3) bezeichnet.

Die Idee des erfindungsgemäßen Verfahrens ist, dass mittels eines mehrschichtigen Autoencoders spezielle Merkmale der überwachten Komponenten einer technischen Anlage gelernt werden. Mittels dieses Deep-Learning Verfahrens können so rein datengetriebene Merkmale extrahiert werden. Die Architektur des mehrschichtigen Autoencoders erlaubt verteilte Repräsentationen der Eingangsdaten, d.h. ausgehend von Rohsignalen am Eingang verlaufen die Merkmalsrepräsentationen von eher simplen 'low level'- bis hin zu höherwertigen 'high level'-Merkmalen. Die Funktionsweise ähnelt der des menschlichen Gehirns bei der Bildverarbeitung: aus einzelnen Erregungen durch Pixel eines Bildes auf der Retina extrahiert das neuronale Netz über mehrere Schichten (Areale) verschiedene Merkmale (z.B. Ecken, Kanten, Formen) den finalen abstrakten Inhalt des Gesehenen.

In Fig. 3 ist ein Flussdiagramm für ein Ausführungsbeispiel des erfindungsgemäßen Verfahrens zur Zustandsüberwachung von Komponenten einer technischen Anlage angegeben.

In einem ersten Schritt S1 werden die Eingangsdaten erfasst. Beispielsweise wird das Ausgangssignal eines Sensors oder mehrerer Sensoren einer Verarbeitungseinheit zugeführt, welche dieses Ausgangssignal in zumindest ein elektrisches Signal umwandelt, das einem Computer zuführbar ist, und derart ausgestaltet ist, dass es in einem Lernalgorithmus weiter verarbeitet werden kann. Denkbar ist aber auch, dass die Rohdaten direkt nach Erfassung einem Computer zugeführt werden. In den meisten Fällen wird es sich hier um große Datenmengen handeln. Bei der Aufnahme von Vibrationen einer Maschine über eine Zeitspanne von 60 s ergeben sich bei einer Abtastrate von 20 kHz bereits über eine Million Datenpunkte eines vibro-akustischen Signals.

In einem nächsten Schritt S2 werden die ggfs. zuvor vorverarbeiteten Daten einem Merkmalsextraktionsverfahren zugeführt. Dieses ist erfindungsgemäß ein Deep-Learning Verfahren, in welchem Merkmale, die Informationen der überwachten Komponenten enthalten, mittels eines mehrschichtigen Autoencoders extrahiert werden. Die Eingangsdaten werden der ersten Schicht eines Autoencoders zugeführt. Bei den Datenpunkten eines Bildes kann in der ersten Schicht z.B. hergeleitet werden, welche Punkte Kanten und welche Punkte Ecken repräsentieren könnten. Das erste Merkmal "Kanten und Ecken" wird auf diese Weise bestimmt. In der nächsten Schicht des Autoencoders werden die zuvor bestimmten Kanten und Ecken wiederum derart zusammengesetzt, dass sie Teile vorgegebener Motive, wie Haus, Auto oder Baum repräsentieren. Das auf diese Weise bestimmte Merkmal heißt dann (ggfs. nach Durchlauf mehrerer Schichten) Haus, Auto oder Baum. Im Falle der Bilderkennung sind somit ganze Objekte identifizierbar. Im Falle der Zustandsüberwachung werden Merkmale wie ein Mittelwert einer bestimmten Datenmenge, eine Varianz, Minimum, Maximum, Schwingungsamplitude etc. anhand der verborgenen Variablen der einzelnen Schichten ablesbar und so werden Charakteristika der Datenmenge oder repräsentative Merkmale auf eine generelle Art und Weise erkannt. Die Ausgangsdaten der letzten Schicht des Autoencoders sollten nach Durchlaufen des Autoencoders wieder den Eingangsdaten entsprechen, wenn das durch den Autoencoder gebildete "künstliche Modell" der Wirklichkeit entspricht.

Die Ausgabe der aus dem "künstlichen Modell" abgeleiteten Größen, also der Ausgangsdaten des Autoencoders, erfolgt in Schritt S3. Anschließend wird die Rekonstruktion der Daten durch Vergleich der Ausgangs- mit den Eingangsdaten überprüft. Je kleiner das Delta, also der Unterschied zwischen den Ausgangs- und Eingangsdaten, desto besser die Merkmalsextraktion und die verborgenen Variablen. Der Autoencoder kann nun durch Veränderung der Merkmale (= der verborgenen Variablen) solange trainiert werden, bis die Ausgangsdaten des Autoencoders nahezu den Eingangsdaten entsprechen. Nach der Trainingsphase werden die Merkmale, die einen Zustand der überwachten Komponenten charakterisieren, ausgegeben.

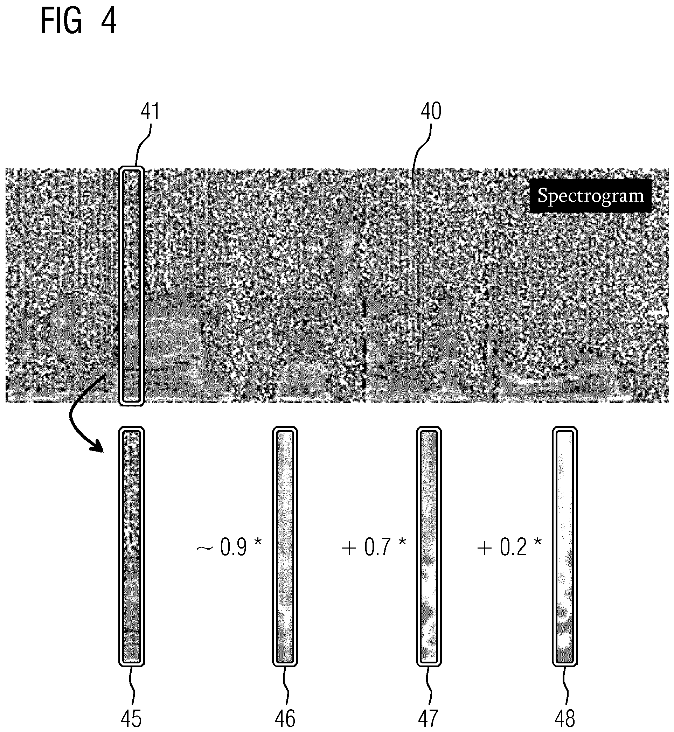

Fig. 4 enthält ein weiteres Ausführungsbeispiel für die Anwendung des erfindungsgemäßen Verfahrens aus dem Bereich der Zustandsüberwachung eines Radiallagers einer Antriebswelle. Gezeigt ist ein Spektrum 40 eines am Lager erfassten vibro-akustischen Signals y(t). Zur Merkmalsextraktion wird ein Signalmodell angenommen, welchem an verschiedenen rotierenden Maschinen erfasste vibro-akustische Zeitreihendaten zu Grunde liegen. Es wird angenommen, dass das für das Lager erfasste Signal y (t) analog zum oben genannten Bildverarbeitungsbeispiel eine Komposition aus verschiedenen Subsignalkomponenten ist, die sich in einer erlernten Deep-Learning Architektur widerspiegeln:

$$y(t) = x(t) + w(t) + n(t) + \dots + e(t) + g(t) + \dots$$

Hierbei sind x(t) das charakteristische Signal (zum Beispiel abhängig von einer Drehzahl der Welle), w(t) eine Verschleißkomponente, n(t) ein Systemrauschen, e(t) das Fehlercharakteristikum und g(t) ein genereller Gauss'scher Rauschterm. Zur Modellbildung wird für jede der genannten Subsignalkomponenten (x(t), w(t), n(t), e(t) und g(t)) eine eigene Schicht eines Autoencoders gebildet. Einzelne Koeffizienten vor den Subsignalkomponenten werden als Merkmale mittels des Deep-Learning-Verfahren erlernt. Man kann so die Information extrahieren, dass sich der ausgewählte Zeitbereich 45 des Eingangssignals y(t) beispielsweise aus einer Zerlegung des Signals in drei Schichten 46, 47 und 48 ergibt, welche bestimme von den oben genannten Subsignalkomponenten repräsentieren. Mittels ausgewählter Testszenarien können nun anhand einiger weniger Komponenten die repräsentativen Schichten erlernt und Muster spezifischer Fehler extrahiert werden. Historische oder durch Versuchsaufbauten ermittelte Daten mit darin enthaltenen Fehlerzuständen gleichen Typs sind eine Voraussetzung zum Erlernen der Repräsentationsschichten.

**Patentansprüche**

1. Verfahren zur Zustandsüberwachung von Komponenten einer technischen Anlage,
   bei dem Eingangsdaten, welche von mit den Komponenten verbundenen Sensoren (1) bereitgestellt werden, erfasst werden, **dadurch gekennzeichnet,**
   **dass** die Eingangsdaten (x1, x2,...) einem Merkmalsextraktionsverfahren zugeführt werden,
   **dass** innerhalb dieses Verfahrens, welches gemäß einem Deep-Learning Verfahren ausgebildet ist, Merkmale, die Informationen der überwachten Komponenten enthalten, mittels eines vielschichtigen Autoencoders extrahiert werden,
   **dass** der Autoencoder die Eingangsdaten (x1, x2,...) mittels der extrahierten Merkmale neu berechnet und diese Ausgangsdaten (x'1, x'2, ...) des Autoencoders mit den Eingangsdaten (x1, x2,...) vergleicht,
   **dass** der Autoencoder durch Veränderung der Merkmale solange trainiert wird, bis die Ausgangsdaten (x'1, x'2, ...) des Autoencoders nahezu den Eingangsdaten (x1, x2, ...) entsprechen, dass nach der Trainingsphase die Merkmale, die einen Zustand der überwachten Komponenten charakterisieren, ausgegeben werden.

2. Verfahren nach Anspruch 1,
   **dadurch gekennzeichnet, dass**
   die zuvor ermittelten Merkmale mit Merkmalen aus Expertenwissen kombiniert werden.

3. Verfahren nach Anspruch 1 oder 2,
   **dadurch gekennzeichnet, dass**
   es sich bei den Eingangsdaten (x1, x2,...) um vibro-akustische Daten handelt.

4. Zustandsüberwachungssystem (10) für Komponenten einer technischen Anlage,
   welches zumindest einen mit einer Komponente verbundenen Sensor (1) zur Erfassung von Eingangsdaten (x1, x2,...), umfasst, **dadurch gekennzeichnet,**
   **dass** zumindest ein vielschichtiger Autoencoder vorgesehen ist, dem die Eingangsdaten (x1, x2,...) zugeführt werden,
   **dass** der Autoencoder weiterhin derart ausgebildet ist, dass die Eingangsdaten (x1, x2,...) mittels eines Deep-Learning-Verfahrens neu berechnet werden, wobei in jedem Autoencoder Merkmale, die Informationen der überwachten Komponenten enthalten, extrahiert werden,
   **dass** ein Vergleichsmodul vorgesehen ist, in welchem die Ausgangsdaten (x'1, x'2,...) des Autoencoders mit den Eingangsdaten (x1, x2,...) verglichen werden,
   **dass** ein Trainingsmodul vorgesehen ist, das mit dem zumindest einen Autoencoder verbunden ist und das derart ausgebildet ist, dass die Merkmale derart verändert werden können, bis eine Differenz zwischen den Eingangs- und Ausgangsdaten minimal ist,
   **dass** ein Ausgabemodul vorhanden ist, das nach der Trainingsphase die Merkmale, welche den Zustand der überwachten Komponenten der technischen Anlage charakterisieren, ausgibt.

5. Zustandsüberwachungssystem gemäß Anspruch 4,
   **dadurch gekennzeichnet,**
   **dass** ferner noch Mittel zur Datenverarbeitung (11) vorgesehen sind, welche von den Sensoren (1) bereitgestellten Eingangsdaten für das Deep-Learning-Verfahren vorverarbeiten.

6. Zustandsüberwachungssystem gemäß Anspruch 4 oder 5,
   **dadurch gekennzeichnet, dass**

es sich bei den Eingangsdaten (x1, x2,...) um vibro-akustische Daten handelt.

# FIG 1

10

Sensoren — 1

Datenerfassungsmodul

2a

$I$

$t$

2

2b

3

4

Datenvorverarbeitung — 11

Datenanalyse — 12

Messdatenbank — 13

5

Memory

6 — RAM    ROM — 7

Trainingsdaten — 14

8    9

## FIG 2

## FIG 3

FIG 4

Europäisches
Patentamt

European
Patent Office

Office européen
des brevets

# EUROPÄISCHER RECHERCHENBERICHT

**Nummer der Anmeldung**

EP 16 20 1469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | AHMED H O A ET AL: "Effects of deep neural network parameters on classification of bearing faults", IECON 2016 - 42ND ANNUAL CONFERENCE OF THE IEEE INDUSTRIAL ELECTRONICS SOCIETY, IEEE, 23. Oktober 2016 (2016-10-23), Seiten 6329-6334, XP033034159, DOI: 10.1109/IECON.2016.7793957 [gefunden am 2016-12-21] * das ganze Dokument * ----- | 1-6 | INV. G05B23/02 G01M13/04 |
| A | JIA FENG ET AL: "Deep neural networks: A promising tool for fault characteristic mining and intelligent diagnosis of rotating machinery with massive data", MECHANICAL SYSTEMS AND SIGNAL PROCESSING, ELSEVIER, AMSTERDAM, NL, Bd. 72, 18. November 2015 (2015-11-18), Seiten 303-315, XP029382965, ISSN: 0888-3270, DOI: 10.1016/J.YMSSP.2015.10.025 * Seite 1 - Seite 12; Abbildung 2 * ----- | 1,3 | |
| A | US 2010/274433 A1 (PROKHOROV DANIL V [US] ET AL) 28. Oktober 2010 (2010-10-28) * das ganze Dokument * ----- | 1,3 | |

**RECHERCHIERTE SACHGEBIETE (IPC)**

G05B
G01M

Der vorliegende Recherchenbericht wurde für alle Patentansprüche erstellt

| Recherchenort | Abschlußdatum der Recherche | Prüfer |
|---|---|---|
| München | 28. April 2017 | Kuntz, Jean-Marc |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 20 1469

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2017

| Im Recherchenbericht angeführtes Patentdokument | Datum der Veröffentlichung | Mitglied(er) der Patentfamilie | Datum der Veröffentlichung |
|---|---|---|---|
| US 2010274433 A1 | 28-10-2010 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Y. LECUN ; Y. BENGIO ; G. HINTON.** *Nature,* 2015, vol. 521, 436